**Europäisches Patentamt**

**European Patent Office**

**Office européen des brevets**

(19)

(11) Veröffentlichungsnummer: **0 216 797**
**B1**

(12) **EUROPÄISCHE PATENTSCHRIFT**

(45) Veröffentlichungstag der Patentschrift: **04.07.90**

(21) Anmeldenummer: **86901071.0**

(22) Anmeldetag: **03.02.86**

(86) Internationale Anmeldenummer:
**PCT/EP86/00057**

(87) Internationale Veröffentlichungsnummer:
**WO 86/05347 12.09.86 Gazette 86/20**

(51) Int. Cl.⁵: **H 04 N 5/60, H 04 N 5/10**

(54) **EMPFANGSGERÄT ZUM EMPFANG VON MITTELS KABEL ÜBERTRAGENEN FERNSEHSENDUNGEN MIT EINER TORSCHALTUNG.**

(30) Priorität: **09.03.85 DE 3508527**

(43) Veröffentlichungstag der Anmeldung:
**08.04.87 Patentblatt 87/15**

(45) Bekanntmachung des Hinweises auf die
Patenterteilung:
**04.07.90 Patentblatt 90/27**

(84) Benannte Vertragsstaaten:
**AT BE CH DE FR GB IT LI LU NL SE**

(56) Entgegenhaltungen:
**FR-A-1 066 081**
**FR-A-2 305 903**
**US-A-3 743 774**

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **HARTMANN, Uwe**
**Tallardstrasse 15**
**D-7730 Villingen-Schwenningen (DE)**
Erfinder: **MAI, Udo**
**Mühleschweg 2**
**D-7730 VS-Tannheim (DE)**
Erfinder: **OHNEMUS, Fritz**
**An der Hammerhalde 13**
**D-7730 Villingen-Schwenningen (DE)**

**Beschreibung**

Die Erfindung geht aus von einem Empfangsgerät zum Empfang von mittels Kabel übertragenen Fernsehsendungen mit einer Torschaltung zur Vermeidung des Empfangs fremder Funkdienste.

Bekanntlich sind bei den Frequenzen für das Kabelfersehen auch Kanäle vorgesehen, die bei drahtloser Ausstrahlung fremden Funkdiensten zugeordnet sind, wie z.B. Polizeifunk usw..

Es ist bekannt, derartige Funkdienste dadurch unhörbar zu machen, daß der Ton bei Empfang eines Sendesignals, welches nicht der Fernsehnorm entspricht, der Tonkanal stummgesteuert wird. Dies geschieht in bekannter Weise dadurch, daß nur bei Feststellung von Koinzidenz der empfangenen Zeilensynchronimpulse und der vom Empfangsgerät erzeugten zeilenfrequenten Impulse der Tonkanal durchgeschaltet wird. Dadurch wird vermieden, daß die fremden Funkdienste hörbar sind (DE—C—25 13 344). Diese Schaltung arbeitet zuverlässig, solange ein Empfangsgerät nur für HF-Empfangssignale ausgelegt ist. Es gibt jedoch Geräte, die nicht ausschließlich dem Empfang von HF-Signalen dienen. Durch einen besonderen Eingang am Fernsehempfangsgerät ist es möglich, z.B. Spiele, Computer, Videotuner, Videorecorder anzuschließen, deren FBAS-Signal über einen Schalter an die Video- und Synchronisierstufen mit Phasenvergleich und Koinzidenz anschaltbar sind. Diese Peripheriegeräte stellen Pseudofernsehsender dar, auf die die Tonstummschaltung reagiert, d.h. bei Vorhandensein eines Signals aus dem angeschlossenen Gerät wird der Tonkanal durchgeschaltet, auch dann, wenn der Fernsehempfänger auf die Frequenz eines fremden Funkdienstes abgestimmt ist. Dies entspricht jedoch nicht den Vorschriften, die besagen, daß in jedem Fall der Ton eines solchen Dienstes unhörbar bleiben muß.

Der Erfindung liegt die Aufgabe zugrunde, auch für den Fall des Anschlusses von Peripheriegeräten auf einfache Weise den genannten Vorschriften zu genügen. Diese Aufgabe wird durch die in den Patentansprüchen gekennzeichnete Anordnung gelöst.

Nachstehend wird die Erfindung am Ausführungsbeispiel mit Hilfe der Zeichnung erläutert.

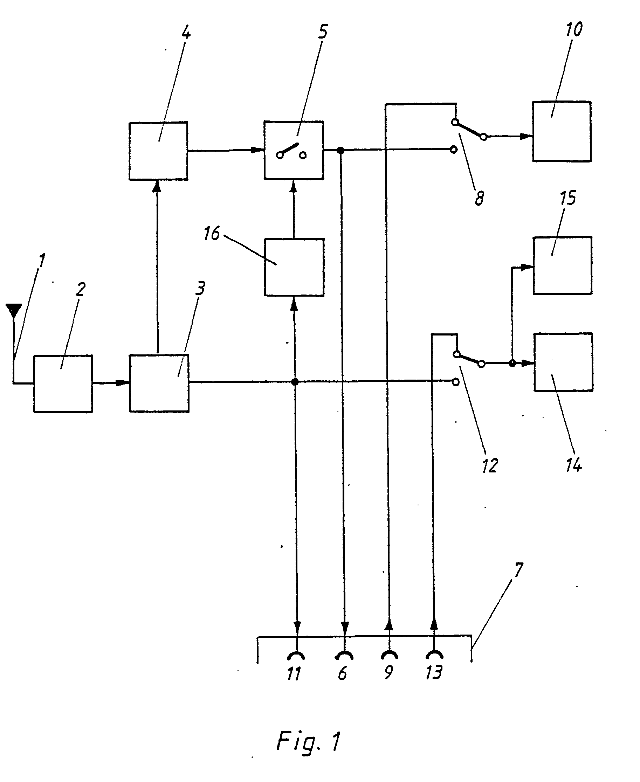

Figur 1 zeigt die Anordnung in einem Blockschaltbild;

Figur 2 zeigt die Anordnung nach Figur 1 als diskretes Schaltungsbeispiel.

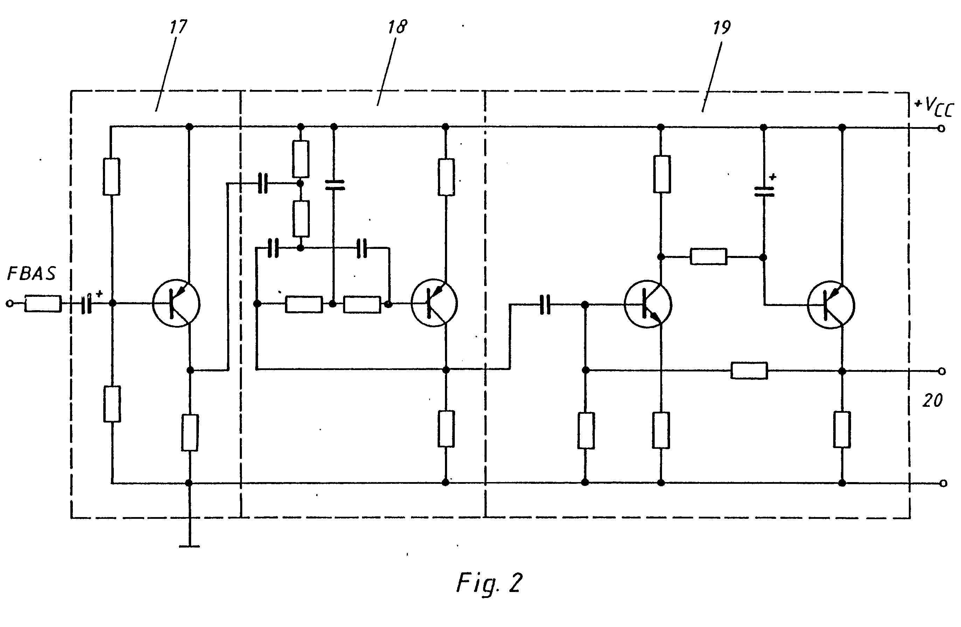

Ein von der Antenne 1 empfanges HF-Signal gelangt an den Tuner 2 und von dort an die ZF-Stufe 3, von welcher der Tonkanal und der Videokanal abzweigen. Über eine Ton-ZF-Stufe 4 gelangt das Tonsignal über eine Torschaltung 5 an einen nach außen führenden Kontakt 6 einer Buchsenleiste 7 für den Anschluß z.B. eines Kopfhörers sowie an einen Kontakt eines Umschalters 8, dessen anderer Kontakt mit einem Eingangsanschluß 9 verbunden ist, von welchem die Tonsignale an die Tonstufe 10 des Empfängers umschaltbar sind. Von der ZF-Stufe 3 gelangt das Videosignal an einen nach außen führenden Kontakt 11 und an einen Kontakt eines weiteren Umschalters 12, dessen anderer Kontakt mit einem Eingangsanschluß 13 verbunden ist. Die Eingangs- und Ausgangsanschlüsse 9, 13 und 6, 11 dienen zur Verbindung des Empfangsgerätes mit den Peripheriegeräten. Der Umschalter 12 ist mit den Videosignalstufen 14 und den für die Ablenkung der Elektronenstrahlen der Bildwiedergaberöhre zuständigen Schaltungen 15 verbunden. Das Steuersignal zur Beeinflussung der Torschaltung 5 wird aus dem ZF-Signal gewonnen und in einer Stufe 16 verarbeitet, welche in Figur 2 ausführlich beschrieben wird.

Zunächst gelangt das FBAS-Signal über eine Impulstrennstufe 17 an eine auf die Zeilenimpulsfrequenz abgestimmte Siebschaltung 18, welche im gezeigten Beispiel als Doppel-T-RC-Filter dargestellt ist. Auch jede andere Selektionsschaltung ist möglich wie z.B. ein LC-Schwingkreis, der jedoch nicht so kostengünstig ist wie ein RC-Netzwerk. Auch magnetische Einstreuungen können die Wirkungsweise der Stummsteuerschaltung nachteilig beeinträchtigen. Eine an die Siebschaltung 18 angeschaltete Schaltstufe 19 mit Hystereseverhalten erzeugt nur bei Vorhandensein von periodisch auftretenden Impulsen in einem eng tolerierten Frequenzbereich am Ausgang 20 der Schaltustufe 19 ein Signal, welches zur Steuerung der Torschaltung 5 dient.

Bezugszeichen
1 Antenne
2 Tuner
3 Zwischenfrequenzstufe
4 Ton-ZF-Stufe
5 Torschaltung
6 Kontakt
7 Buchsenleiste
8 Umschalter
9 Eingangsanschluß
10 Tonstufe
11 Kontakt
12 Umschalter
13 Eingangsanschluß
14 Videosignalstufen
15 Ablenkschaltungen
16 Steueresignalstufe
17 Impulsabtrennstufe
18 Siebschaltung
19 Schaltstufe
20 Ausgang

**Patentansprüche**

1. Empfangsgerät zum Empfang von mittels Kabel übertragenen Fernsehsendungen mit einer Torschaltung zur Vermeidung des Empfangs fremder Funkdienste, wobei die Torschaltung im Tonkanal des Empfangsgerätes angeordnet ist, mit einem Bild-ZF-Demodulator und einer an diesen angeschalteten Impulsabtrennstufe für Zeilensynchronsignale des Empfangssignals dadurch gekennzeichnet, daß an die Impulsabtrennstufe (17) eine auf die Zeilenfrequenz abgestimmte selektive Siebschaltung (18) angeschaltet ist, an welcher das Signal zum Entriegeln der Torschaltung (5) abnehmbar ist.

2. Empfangsgerät nach Anspruch 1, dadurch gekennzeichnet, daß die Siebschaltung (18) ein auf die Zeilensynchronimpulse abgestimmtes RC-Netzwerk ist.

3. Empfangsgerät nach Anspruch 1, dadurch gekennzeichnet, daß die Siebschaltung ein auf die Zeilensynchronimpulse abgestimmtes LC-Filter ist.

4. Empfangsgerät nach Anspruch 1, dadurch gekennzeichnet, daß an die Siebschaltung eine Schaltstufe (19) mit Hysteresecharakteristik angeschlossen ist.

## Revendications

1. Appareil récepteur pour la réception d'émissions de télévision transmises par câbles, comportant un circuit de porte pour éviter la réception de services de radiocommunication spécifiques, le circuit de porte étant disposé dans le canal audio de l'appareil récepteur avec un démodulateur de fréquence intermédiaire vidéo et un étage séparateur d'impulsions pour les tops de synchronisation de ligne du signal récepteur, branché sur ce dernier, caractérisé en ce que sur l'étage séparateur d'impulsions (17) est branché un circuit de filtrage sélectif (18) accordé à la fréquence de lignes, duquel peut être prélevé le signal pour le déclenchement du circuit de porte (5).

2. Appareil récepteur selon la revendication 1, caractérisé en ce que le circuit de filtrage (18) est constitué par un réseau RC, accordé à la fréquence des tops de synchronisation de ligne.

3. Appareil récepteur selon la revendication 1, caractérisé en ce que le circuit de filtrate est constitué par un filtre LC accordé à la fréquence des tops de synchronisation de ligne.

4. Appareil récepteur selon la revendication 1, caractérisé en ce qu'au circuit de filtrage est accordé un étage de commutation (19) présentant une caractéristique d'hystérésis.

## Claims

1. Receiver for the reception of television transmissions transmitted by means of cable with a gate circuit for avoiding the reception of external radio services, the gate circuit being located in the sound channel of the receiver, with a picture-line-frequency-demodulator and a pulse clipper connected to the latter for the line synchronizing signals of the reception signal, characterised in that there is connected to the pulse clipper (17) a selective filter (18) tuned to the line frequency, from which the signal for the unlatching of the gate circuit (5) can be derived.

2. Receiver according to Claim 1, characterised in that the filter (18) is an RC network tuned to the line synchronizing pulses.

3. Receiver according to Claim 1, characterised in that the filter is an LC filter tuned to the line synchronizing pulses.

4. Receiver according to Claim 1, characterised in that a switch stage (19) with·hysteresis characteristics is connected to the filter.

Fig. 1

*Fig. 2*

FBAS

+V_CC

17  18  19

20

EP 0 216 797 B1